# EUROPEAN PATENT SPECIFICATION

(11) **EP 0 450 105 B1**
(45) Date of publication and mention of the grant of the patent: **15.11.1995**
(21) Application number: 90106048.3
(22) Date of filing: 29.03.1990
(51) Int. Cl.: C08G 18/10, C08G 18/28, C03C 27/04

(54) **Room-temperature, moisture-curable, primerless, poluyrethane-based adhesive composition and method**
Ohne Grundierung, bei Raumtemperatur feuchtigkeitshärtende auf Polyurethan basierende Klebstoffzusammensetzung und Verfahren
Composition d'adhésif à base de polyuréthane durcissable par l'humidité à température ambiante sans couche de fond et méthode

(43) Date of publication of application: 09.10.1991
(73) Proprietor: ADCO PRODUCTS, INC., Michigan Center Michigan 49254 (US)
(72) Inventor: Baghdachi, Jamil, Northville, Michigan 48167 (US); Mahoney, Keith H., Grosse Pointe City, Michigan 48230 (US); Martin, Glen E., Farmington Hills, Michigan 48331 (US)
(74) Representative: Bunke, Holger, Dr.rer.nat. Dipl.-Chem.

(56) References cited:
- EP-A- 0 310 704
- EP-A- 0 355 426
- DE-A- 3 629 237
- FR-A- 2 292 015

## Description

This invention relates to one-component, moisture-curable polymeric sealant compositions and a method for their use. More particularly, this invention concerns one-component, moisture-curable sealant compositions which possess outstanding adherence to automotive electrocoat coatings and are thus useful as primerless window glass sealants in automotive applications.

### Background of the Invention

In the manufacture of motor vehicles, windshields and other fixed-panel windows are attached to the vehicle body by means of a polymeric sealant. In order to obtain maximum bond strength between the glass window panels and the coated vehicle body, some surface preparation of the vehicle body coating is typically required. Because the bead of window sealant material is generally applied to a vehicle body which has already been painted or otherwise coated, it is usually necessary to use a primer material to prepare the surface to receive the sealant. Once the sealant bead is applied to the coated vehicle body, the glass panel is then installed onto the vehicle so that the bead of sealant comes into firm contact with both the painted substrate surface and the glass panel. After the sealant bead has properly cured, the vehicle must pass government Motor Vehicle Safety Standards (MVSS) tests which include the crash-worthiness of the windhsield installation.

The Safety Standards provide no margin for failure of the windshield bonding system. In crash and roll-over situations, the windshield provides additional support of the vehicle roof and must remain bonded to the vehicle body.

Motor vehicles today are coated with a wide variety of paint types and coating systems. Each paint type has its unique formulation and surface characteristics, once dried. Even minor changes in the formulation of a paint may lead to adhesive failure of the bond between the window sealant material and the painted vehicle body. Typically, in the automotive industry there are frequent changes in the formulations of paints which are employed. Some of these changes are motivated by aesthetic considerations, others by more practical concerns. Changes in the paint formulation may relate to modification of solvent types or reduction in solvent content of the formulation, changes in the nature and concentration of paint additives, yearly color styling changes, and other changes dictated by the user's location and paint application requirements.

Typical coatings systems used in the automotive industry today involve the application to the vehicle body of 1) an electrocoat paint coating, 2) a primer-surfacer coating, and 3) a decorative paint coating. In some cases, notably truck bodies, the decorative coating takes the form of a pigmented topcoat. In the case of automobiles, the industry is tending toward increased use of a decorative coating made up of a thin pigmented basecoat layer which is overcoated by one or more thicker, clear, topcoat layers. So-called "metallic" color styles, which contain flakes of mica, aluminum, or other metal in the pigmented basecoat, are becoming increasingly popular.

In a typical "metallic" basecoat/clearcoat coating system, this means that there may be as many as seven interlayer interfaces between an applied bead of sealant and the underlying metal vehicle body: 1) the sealant to sealant-primer interface; 2) the sealant-primer to clear topcoat interface; 3) the clear topcoat to pigmented basecoat interface; 4) the basecoat to metallic flake interface; 5) the basecoat to primer-surfacer interface; 6) the primer-surfacer to electrocoat interface; and 7) the electrocoat to vehicle body interface. The potential exists for delamination or adhesive failure at one or more of these interfaces when stress is applied. In a practical sense, however, delamination of the electrocoat from the underlying steel vehicle body is a virtual impossibility because of the nature of the electrochemical process by which that paint layer is applied.

FR-A-2 292 015, EP-A-0 355 426 and EP-A-0 353 551 all disclose one-component sealant compositions comprising a silane-terminated polyurethane base polymer of the formula 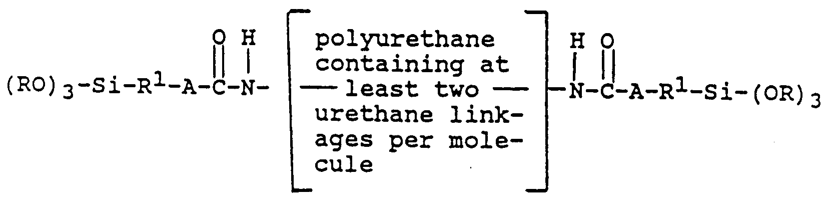
wherein R is lower alkyl of from 1 to 6 carbon atoms;
R¹ is a divalent bridging radical selected from the group consisting of a divalent hydrocarbon radical, a divalent hydrocarbon ether radical and a divalent hydrocarbon amino radical;
A is selected from the group consisting of -S- and -NR²- where R² is hydrogen or alkyl of from 1 to 6 carbon atoms.

The disclosures of the aforementioned three documents differ from each other in that different modifying additives are suggested as copolymerizing agents, curing agents or accelerators, respectively. FR-A-2 292 015 discloses as the sole indispensable additive a small amount of N-beta-aminoethyl-gamma-aminopropyl trimethoxysilane which additive is said to remarkably enhance the curing rate of the obtained composition.

EP-A-0 355 426 combines two different additives with said polyurethane base polymer, namely (1) an aminosilane having a terminating free amino group and (2) a modified piperazinyl compound as an accelerator. The used silyl-substituted piperazinyl accelerating agents are said to also improve cure rates of the sealant compositions.

EP-A-0 353 551 again suggests to use different components to be added to said polyurethane base polymer, namely (1) an aminosilane of the same type as used in EP-A-0 355 426 and (2) a titanium ester accelerator. The inclusion of such titanate ester accelerators is said to significantly increase the cure rates over the cure rates for similar sealant compositions.

All the sealant compositions as referred to hereinabove have been suggested to be used for bonding glass-panels to a motor vehicle body.

Notwithstanding that there are a number of known sealant compositions based upon the very same type of polyurethane base polymer, there still remains a need in the art for a sealant composition and sealing system which provides a direct, firm, durable, weather-resistant seal between motor vehicle fixed-window glass panels and the electrocoat paint layer of the motor vehicle body.

### Summary of the Invention

The present invention provides, in one embodiment, a polymeric sealant composition which is useful for bonding fixed window glass panels and/or backlight glass panels to a motor vehicle body which permits application of the sealant bead directly over the electrocoat layer without the need for a sealant primer. The sealant composition of this invention eliminates the need for a sealant primer and forms a strong, durable, weather-resistant bond directly between the glass window panel and the electrocoated vehicle body. By use of the sealant composition of this invention, the number of interfaces between the metal vehicle body and sealant is reduced to two, virtually eliminating the potential for delamination of the sealant from the auto body.

The sealant composition of this invention comprises (a) a silane-capped polyurethane base polymer, (b) from 2.0 to 10.0 parts by weight of an aminosilane electrocoat adhesion promoter, based on 100 parts by weight of the base polyurethane polymer, (c) a curing catalyst and (d) an accelerating agent.

The sealant composition may further contain solvents, thixotropic agents, flexibilizing agents fillers, and pigmenting agents to obtain the desired color, consistency, and flow characteristics.

The silane-capped polyurethane base polymer has the idealized structure 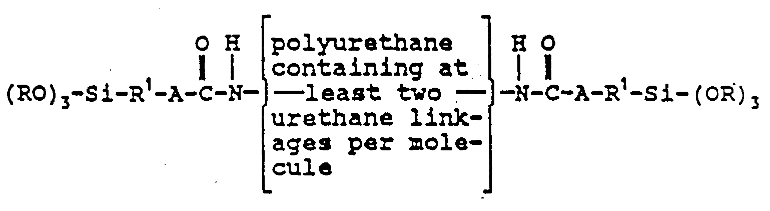
where R is lower alkyl of from 1 to 6 carbon atoms and R¹ is a divalent bridging radical selected from the group consisting of divalent hydrocarbon radicals, divalent hydrocarbon ether radicals, and divalent hydrocarbon amino radicals. The group A is selected from -S- and - NR²- where R² is hydrogen or alkyl of from one to six carbon atoms.

The aminosilane electrocoat adhesion promoter has the structure 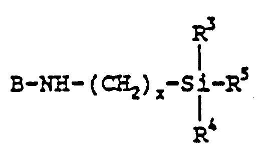
where x is an integer of from one to three and R³, R⁴ may and R⁵ may be the same or different and are selected from alkyl and alkoxyl of from one to four carbon atoms.

The group B is 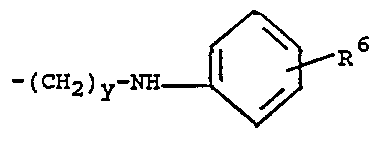
The group R⁶ is alkyl of one to four carbon atoms or alkenyl up to four carbon atoms. y is an integer of from one to three.

Suitable curing catalysts for purposes of this invention include metallic salts of tin, lead, mercury, or Group VIII elements; organo-iron, organo-tin (IV) and organo-lead compounds; aliphatic or aromatic carboxylic acids; toluenesulfonic acid; salts of organic acids such as tin naphthenate, tin octoate, tin butyrate, dibutyl tin diacetate, dibutyltin dioctoate, dibutyltin dilaurate, iron stearate, or lead octoate; and organic amines such as trialkylamines; *N*-substituted piperidines, *N,N'*-substituted piperazines, and pyridine. The preferred curing catalyst for compositions of the present invention is dibutyltin diacetate.

Suitable accelerating agents for use in the compositions of the present invention are titanate esters of the type disclosed in United States Patents 4,600,689 and 4,623,738, respectively. The titanate eaters which are employed as accelerators possess at least one primary or secondary amine group per molecule. Preferred materials include (4-aminobenzene)sulfanato-*O*, *bis*-(dodecylbenzene)sulfanato-*O*, 2-propanolato titanium (IV) (KR® 26S); 2-propanolato, *tris*-(3,6-diaza)hexanolato titanium (IV) (KR® 44); 2,2-*bis*-(2-propenolatomethyl)butanolato, *tris*-(2-ethylenediamino)ethylato titanium (IV) (Lica® 44); and 2,2-*bis*-(2-propenolatomethyl)butanolato, *tris*-(3-amino)phenylato titanium (IV) (Lica® 97). The preferred material is Lica® 44.

In another embodiment, the present invention provides a method of bonding fixed-window glass panels to a motor vehicle body comprising the steps or a) applying a conventional electrocoat paint coating to the metal body of the motor vehicle; b) applying masking means to those portions of the electrocoat painted motor vehicle body set aside to receive a bead of fixed-glass panel sealant; c) applying one or more decorative and protective paint coatings to the masked motor vehicle body; d) removing the masking means; e) applying directly to the previously masked electrocoat painted portions of the motor vehicle body a bead of the polyurethane-based sealant composition of the present invention; and f) affixing a glass window panel to the sealant bead.

In yet another embodiment, the present invention provides motor vehicles having fixed-window glass panels affixed directly to the electrocoat painted metal body of the motor vehicle by means of a polyurethane-based sealant composition of the present invention.

### Detailed Description

The sealant compositions of the present invention comprise a base silane-capped polyurethane polymer having a number average molecular weight in the range of from 10,000 to 30,000 having the structure 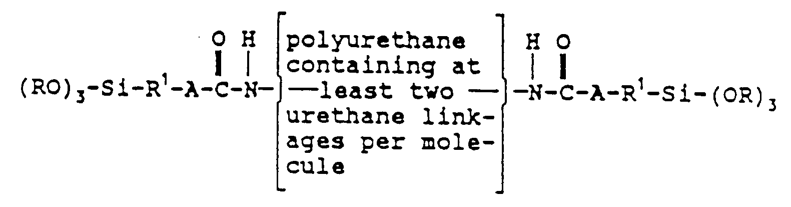
where R, R¹, and A are as defined above. Such silane-capped polyurethane polymers are prepared by conventional polymerization techniques by reacting a polyether polyol having at least two free hydroxyl groups per molecule with an isocyanate compound having at least two isocyanate reactive groups per molecule as described in US-A-3,979,344.

The polyether polyol and isocyanate compound are reacted in a weight ratio of 8:1 to 12:1, respectively. The starting polyether polyol preferably has a number average molecular weight of between 1,000 and 5,000. One such preferred starting material is polypropylene glycol.

The starting isocyanate compound may be selected from a variety of materials known in the art for such purposes, such as *p*-phenylene diisocyanate, biphenyl-4,4'-diisocyanate, toluene diisocyanate (TDI), 3,3'-dimethyl-4,4'-biphenylene diisocyanate, 1,4-tetramethylene diisocyanate, 1,6-hexamethylenediisocyanate, 2,2,4-trimethylhexane-1,6-diisocyanate, methylene *bis*-(phenyl isocyanate), 1,5-naphthalene diisocyanate, isophorone diisocyanate (IPDI), and methylene *bis*-(4-cyclohexylisocyanate). The preferred material is toluene diisocycanate.

The copolymer formed by reaction of these two monomers is end-capped with a silane group having the structure -A-R¹-Si-(OR)₃. The group A is sulfur, >NH, or an alkylamino group in which the alkyl portion contains from one to six carbon atoms. The bridging group R¹ may be a divalent hydrocarbon radical, a divalent hydrocarbon radical containing one or more oxygen ether linkages, or a divalent hydrocarbon radical containing one or more >NH linkages. The end-capping of the polyurethane polymer is achieved by including in the reaction mixture containing the polyether polyol and isocyanate compound an aminosilane compound such as *gamma*-amionopropyltrimethoxysilane, *gamma*-aminopropyltriethoxysilane, and N-*beta*-aminoethyl-*gamma*-aminopropyltrimethoxysilane.

As used throughout this specification and the appended claims, the term "alkyl" means a hydrocarbon residue derived from branched or unbranched alkane by removal of a single hydrogen atom. The term "alkoxyl" denotes alkyl groups attached through an oxygen ether linkage to the remainder of the parent molecule. The term "divalent hydrocarbyl" means a branched or unbranched hydrocarbon group derived by removal of two hydrogen atoms from a saturated or unsaturated acyclic hydrocarbon. The term "divalent hydrocarbaryl" denotes a group derived from the removal of two hydrogen atoms from hydrocarbons containing one or more carbocyclic aromatic rings including phenyl, alkylphenyl, and phenylalkyl. The term "divalent cyclohydrocarbyl" means a group derived by the removal of two hydrogen atoms from a carbocyclic non-aromatic hydrocarbon ring including cyclohexane, alkylcyclohexane.

The polyurethane base polymer is mixed with from 2.0 to 10.0 parts by weight, preferably from 4.0 to 8.0 parts by weight, (based on 100 parts by weight of the base polyurethane polymer) of an electrocoat adhesion promoting agent comprising an aminosilane, including hydrohalic salts thereof, of the structure 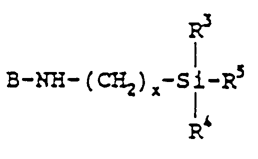
where B, x, R³, R⁴, and R⁵ are as previously defined. By hydrohalic salts is meant the hydrofluoride, hydrochloride, hydrobromlde, and hydroiodide salts, with the hydrochloride salts being preferred.

A preferred electrocoat adhesion promoter used for the purposes of this invention is N-2-[4-vinyl-(benzeneamino)] ethyl-3-aminopropyltrimethoxysilane monohydrochloride.

The composition further includes from 20 to 50 parts by weight of a pigmenting agent and/or filler such as carbon black, from 0.02 to 0.2 parts by weight of a curing catalyst, and from 0.3 to 0.6 parts by weight of an accelerator, all weights based on 100 parts by weight of the capped polyurethane polymer.

Additionally, small amounts, ranging from 0.25 to 0.75 parts by weight, of a thixotropic agent per 100 parts by weight of polyurethane polymer may also be added to adjust the flow characteristics of the sealant composition. A typical thixotropic agent suitable for this purpose is Thixseal®, 1085.

Optionally, from 1.0 to 10.0 parts by weight of flexibilizing agent, preferably from 2.0 to 5.0 parts by weight, may be added to the composition, based on 100 parts by weight of the polyurethane base polymer. Suitable flexibilizing agents for inclusion in the compositions of the present invention include dioctyl phthalate, dibutyl phthalate, diundecyl phthalate, and dioctyl adipate and butyl benzyl phthalate, isodecyldiphenyl phosphate, N-butyl-p-toluene-sulfonamide and N-ethyl-p-toluene-sulfonamide.

While not holding to one particular theory to the exclusion of others, it is believed that when the two above-named sulfonamides, either alone or in admixture, are used in the compositions, they function both to flexibilize the composition and to promote adhesion.

The composition may also optionally include from 5 to 20 parts by weight, preferably 10 parts by weight of a silane- or silicone-surface-treated clay, per 100 parts by weight of the base polymer. Because normal clays (e.g. magnesium and aluminum silicates) contain particle surface hydroxyl groups which are reactive toward the polymeric components of the sealant composition, the clays useful in formulating the sealants of this invention must be surface treated to cap the otherwise reactive hydroxyl groups. This is accomplished by treating the clay with a trialkylsilyl chloride or trialkoxysilyl chloride or mixed tri(alkyl/alkoxy)silyl chloride such as trimethylsilylchloride, trimethoxysilyl chloride, and methyldimethoxysilyl chloride.

In the method of the present invention a motor vehicle body, such as an automobile, truck, or bus body which has been precleaned and/or surface pretreated (for example, by phosphatizing the metal surface), is coated with an electrocoat paint primer by conventional techniques well known in the art. This process is fully described, for example, in US-A-4,575,523. In general, the motor vehicle body to be electrocoated is connected to a direct current source in such a way that it acts as the cathode of an electrical circuit. The motor vehicle body is then immersed in a tank of a suitable aqueous electrodeposition bath which contains the counter electrode. The electrodeposition bath comprises an aqueous dispersion of a thermosetting resin which deposits on the motor vehicle body as a result of the passage of current. When a sufficiently thick layer of electrocoat primer paint has been applied to the motor vehicle body, the body is removed from the tank, rinsed, and the layer of electrocoat paint cured to a smooth, hard, durable coating.

In the next step of the method of this invention, the regions of the motor vehicle body which are destined to receive a bead of fixed-window panel sealant are masked by the application of a masking means such as a strip of tape or strippable polymeric material.

The masked, electrocoated motor vehicle body is then further coated with one or more decorative and/or protective paint coatings by conventional means such as air-spraying, airless spraying, electrostatic spraying, dipping, or brushing. These decorative and/or protective coatings may take the form of one or more pigmented coating layers (topcoat system), or one or more thin, pigmented basecoat layers with one or more overlying layers of clear topcoat (basecoat/clearcoat coating system).

Following the application and curing of the decorative/protective coating layers, the masking means is removed from the motor vehicle body, and a bead of polyurethane-based sealant composition of this invention is applied directly to the electrocoat paint layer in this regions of the motor vehicle body previously masked. In the final step, a fixed-window glass panel is pressed into contact with the sealant bead and the sealant is permitted to cure.

The following examples are provided to permit those skilled in the art to practice the present invention. The example are merely illustrative and are not to be read as limiting the scope of the invention as defined by the appended claims.

### Preparation of the Polyurethane Base Polymer Composition

A silane-capped polyurethane polymer of the type described in United States Patent 3,632,557 was prepared as follows:

| | | |
|---|---|---|
| A. | Niax PPG 2025 ONE (2000 Molecular weight polyether polyol availabe from Union Carbide Corp., 270 Park Ave., New York, NY 10017) | 2001.00 g |
| | Hylene™ (80:20 Grade toluene diisocyanate available from E.I. duPont de Nemours & Co., Wilmington, DE 19898) | 204.00 g |
| | Glacial acetic acid | 0.55 g |
| | Dibutyltin diacetate | 0.45 g |
| B. | Anhydrous toluene | 110.00 g |
| C. | Anhydrous toluene | 81.00 g |
| | Silane A 1110 (*gamma*-Aminopropyl)trimethoxy silane availiable from Union Carbide Corp., 270 Park Ave., New York, NY 10017) | 68.30 g |
| D. | Anhydrous methanol | 273.00 g |

The components of A above were mixed and heated to 155°F (68.3°C) under anhydrous conditions and maintained at that temperature for fifty-five minutes. At the end of that time, B was added. Over the next forty-five minutes, the temperature of the mixture was gradually reduced to 105°F (40.6°C) and heating was continued for two and one-quarter hours. At the end of this time, C was added to the mixture and the resulting mixture was heated at 150-165°F (65.6-73.9°C) for an additional two and one-quarter hours. During this time, samples of the reaction mixture were tested for free isocyanate functional groups. When the tests indicated no residual free isocyanate, D was added and the mixture heated under reflux for a short time. The mixture was degassed and cooled to room temperature.

### Preparation of Sealant Compositions of the Present Invention

### Example 1

A five-gallon Myers mixer fitted with dual mixing blades was charged with 25 lb (11.34 kg) of the base polyurethane polymer prepared as described above. The mixer contents were heated to 65°C and 1.72 lb (0.78 kg) of the electrocoat adhesion promoter, N-2-[4-vinyl(benzeneamino)]ethyl-3-aminopropyltrimethoxysilane monohydrochloride (available as Z-6032 from Dow Corning Co., Midland, MI), 1.1 lb (0.5 kg) of anhydrous methanol, and 0.11 lb (0.5 kg) of neopentyl(diallyl)-oxytri(N-ethyleneamino)ethyl titanate (available as LICA® 44 from Kenrich Petrochemicals, Inc., 140 East 22nd Street, Bayonee, NJ 07002) were added. This mixture was thoroughly blended by mixing for 10 minutes under slight vacuum.

To the above mixture was then added 12.0 g of dibutyl tin diacetate catalyst and mixing was continued for an additional 20 minutes under slightly reduced pressure. Carbon black (7.5 lb, 3.4 kg) and 2.5 lb (1.13 kg) of surface treated aluminum silicate clay (available from Burgess CB, P.O. Box 349, Sanderville, GA 31082) which had been previously dried to less than 0.05% by weight moisture content, were added to the sealant mixture and mixing was continued for an additional 45 minutes under slight vacuum.

The mixer contents were allowed to cool to room temperature and then packaged under anhydrous conditions. The final sealant had the following composition, normalized to 100 parts by weight of the base polyurethane polymer.

| Component | Grams | Parts by Weight Per 100 Parts of Base Polymer |
|---|---|---|
| Base polyurethane polymer | 11,340 | 100 |
| Electrocoat adhesion promoter (Z-6032) | 780 | 6.88 |
| Methanol | 500 | 4.42 |
| LICA® 44 | 50 | 0.44 |
| Dibutyltin diacetate | 12 | 0.11 |
| Carbon black | 3400 | 29.98 |
| Surface treated aluminum silicate clay | 1130 | 9.97 |

The black, homogeneous moisture-curable sealant composition had a viscosity of 60 seconds when extruded from a 0.104 inch (2.64 mm) orifice under a pressure of 60 psi (413.7 kPa) and 76°F (24.4°C).

### Example 2

A sealant composition was prepared in accordance with the composition and method of Example 1, but containing a reduced amount (0.585 kg) of the electrocoat adhesion promoter N-2-[4-vinyl(benzeneamino)]ethyl-3-aminopropyltrimethoxysilane monohydrochloride. The composition had the following composition in parts by weight, normalized to 100 parts by weight of the base polyurethane polymer.

| Component | Grams | Parts by Weight Per 100 Parts of Base Polymer |
|---|---|---|
| Base polyurethane polymer | 11,340 | 100 |
| Electrocoat adhesion promoter (Z-6032) | 585 | 5.16 |
| Methanol | 500 | 4.41 |
| LICA® 44 | 50 | 0.44 |
| Dibutyltin diacetate | 12 | 0.11 |
| Carbon black | 3400 | 29.98 |
| Surface treated aluminum silicate clay | 1130 | 9.96 |

### Example 3

A sealant composition was prepared in accordance with the composition and method of Example 1, but containing an increased amount (0.975 kg) of the electrocoat adhesion promoter N-2-[4-vinyl(benzeneamino)]ethyl-3-aminopropyltrimethoxysilane monohydrochloride. The composition had the following composition in parts by weight, normalized to 100 parts by weight of the base polyurethane polymer.

| Component | Grams | Parts by Weight Per 100 Parts of Base Polymer |
|---|---|---|
| Base polyurethane polymer | 11,340 | 100 |
| Electrocoat adhesion promoter (Z-6032) | 975 | 8.60 |
| Methanol | 500 | 4.41 |
| LICA® 44 | 50 | 0.45 |
| Dibutyltin diacetate | 12 | 0.11 |
| Carbon black | 3400 | 29.98 |
| Surface treated aluminum silicate clay | 1130 | 9.95 |

### Example 4

Following the method of Example 1, a sealant composition was prepared which further contained 0.5 lb (0.23 kg) of a 50/50 mixture of N-butyl-p-toluene-sulfonamide and N-ethyl-p-toluene-sulfonamide (available as Ketjenflex® 8 from Akzo Chemie America, 300 South Riverside Plaza, Chicago, IL 60606) as a flexibilizing agent. The sealant had the following composition in parts by weight, normalized to 100 parts by weight of the bane polyurethane polymer.

| Component | Grams | Parts by Weight Per 100 Parts of Base Polymer |
|---|---|---|
| Base polyurethane polymer | 11,340 | 100 |
| Electrocoat adhesion promoter (Z-6032) | 780 | 6.88 |
| Methanol | 500 | 4.42 |
| LICA® 44 | 54 | 0.48 |
| Dibutyltin diacetate | 12 | 0.11 |
| Flexibilizing agent (Mixture of sulfonamides) | 230 | 2.03 |
| Carbon black | 3,400 | 29.98 |
| Surface treated aluminum silicate clay | 1,130 | 9.96 |

### Example 5

A sealant composition was prepared in accordance with the composition and method of Example 1 but further containing 0.5 lb (0.23 kg) of a di-*iso*-decyl phthalate as a plasticizing agent. The sealant had the following composition in parts by weight, normalized to 100 parts by weight of the base polyurethane polymer.

| Component | Grams | Parts by Weight Per 100 Parts of Base Polymer |
|---|---|---|
| Base polyurethane polymer | 11,340 | 100 |
| Electrocoat adhesion promoter (Z-6032) | 780 | 6.88 |
| Methanol | 500 | 4.42 |
| LICA® 44 | 50 | 0.44 |
| Dibutyltin diacetate | 12 | 0.11 |
| Flexibilizing agent (Di-*iso*-decylphthalate) | 230 | 2.03 |
| Carbon black | 3,400 | 29.98 |
| Surface treated aluminum silicate clay | 1,130 | 9.96 |

### Comparative Example 1

A sealant composition was prepared in accordance with the composition and method of Example 1, but containing as the adhesion promoting agent a mixture of 0.35 lb (0.16 kg) of N-2-aminoethyl-N-3-aminoethyltrimethoxy-silylpropyl-1,2-ethanediamine and 0.15 lb (0.07 kg) of N-*beta*-aminoethyl-*gamma*-aminopropyltrimethoxysilane (available as A 1130 and A 1120, respectively, from Union Carbide Corp., 270 Park Ave., New York, NY 10017). The sealant had the following composition in parts by weight, normalized to 100 parts by weight of the base polyurethane polymer.

| Component | Grams | Parts by Weight Per 100 Parts of Base Polymer |
|---|---|---|
| Base polyurethane polymer | 11,340 | 100 |
| Electrocoat adhesion promoter (Mixture of A 1130 and A 1120) | 230 | 2.03 |
| Methanol | 500 | 4.42 |
| LICA® 44 | 50 | 0.44 |
| Dibutyltin diacetate | 12 | 0.11 |
| Carbon black | 3400 | 29.98 |
| Surface treated aluminum silicate clay | 1130 | 9.97 |

### Comparative Example 2

A sealant composition was prepared in accordance with the composition and method of Example 1, but containing as the adhesion promoting agent 0.5 lb (0.23 kg) of N-2-aminoethyl-N-3-aminoethyltrimethoxy-silylpropyl-1,2-ethanediamine (available as A 1130 and A 1120, respectively, from Union Carbide Corp., 270 Park Ave., New York, NY 10017). The sealant had the following composition in parts by weight, normalized to 100 parts by weight of the base polyurethane polymer.

| Component | Grams | Parts by Weight Per 100 Parts of Base Polymer |
|---|---|---|
| Base polyurethane polymer | 11,340 | 100 |
| Electrocoat adhesion promoter (A 1130) | 230 | 2.03 |
| Methanol | 500 | 4.42 |
| LICA® 44 | 50 | 0.44 |
| Dibutyltin diacetate | 12 | 0.11 |
| Carbon black | 3400 | 29.98 |
| Surface treated aluminum silicate clay | 1130 | 9.97 |

### Comparative Example 3

A sealant composition was prepared in accordance with the method of Example 1, but with the following composition. The adhesion promoting agent used was 2.1 lb (0.95 kg) of *gamma*-(glycidoxy)propyltrimethoxysilane, available from Union Carbide Corp., 270 Park Ave., New York, NY 10017). The sealant had the following composition in parts by weight, normalized to 100 parts by weight of the base polyurethane polymer.

| Component | Grams | Parts by Weight Per 100 Parts of Base Polymer |
|---|---|---|
| Base polyurethane polymer | 11,340 | 100 |
| Electrocoat adhesion promoter | 950 | 8.38 |
| Methanol | 950 | 8.38 |
| LICA® 44 | --- | ---- |
| Dibutyltin diacetate | 12 | 0.11 |
| Carbon black | 3400 | 29.98 |
| Surface treated aluminum silicate clay | 1130 | 9.97 |

### Testing Procedures

The lap shear strength of the materials prepared in accordance with the above Examples were tested according to the following method. In each instance, pairs of shear strength test plates were prepared by bonding two previously electrocoat primed steel plates, each 1 inch by 0.32 inches (2.54 cm x 0.81 cm), with a sealant bead 1 inch long by 0.25 inches wide by 5/16 inches thick (2.54 cm x 0.64 cm x 0.79 cm). The sealant bead was applied along one of the one-inch edges of the test plates by means of a sealant tube. The plates were then pressed together so that the sealant bead was about 0.25 inches (0.64 cm) thick.

The sealant bead applied to the bonded test plates was allowed to cure at room temperature and 50% relative humidity for periods which varied between three hours and three days. After the appropriate cure time in each case, the shear strength of each sealant bead was tested on an Instron testing machine by pulling in a direction parallel to the faces of the bonded test plates. The results of these tests, along with other properties of the tested compositions, appear in the following Table.

**Table**

| **Shear Strength and Properties of Sealant Compositions of The Present Invention** | | | |
|---|---|---|---|
| Example | Lap Shear Strength | | Shore A Hardness |
| | (After 3 Hours) | (After 3 Days) | |
| 1 | 100 psi (689.5 kP) | 845 psi (5826 kP) | 61 |
| 2 | 85 psi (586.1 kP) | 700 psi (4826 kP) | |
| 3 | 97 psi (668.8 kP) | 825 psi (5688 kP) | |
| 4 | 110 psi (758.4 kP) | 900 psi (6205 kP) | 54 |
| 5 | 115 psi (792.9 kP) | 815 psi (5619 kP) | |
| 6 | 105 psi (723.9 kP) | 888 psi (6123 kP) | |
| 7 | 20 psi (137.9 kP) | 325 psi (2241 kP) | 48 |

## Claims

1. A one-component, primerless, moisture-curable sealant composition for bonding glass directly to electrocoated metal substrates comprising a mixture of
(a) a silane-terminated polyurethane polymer of the formula 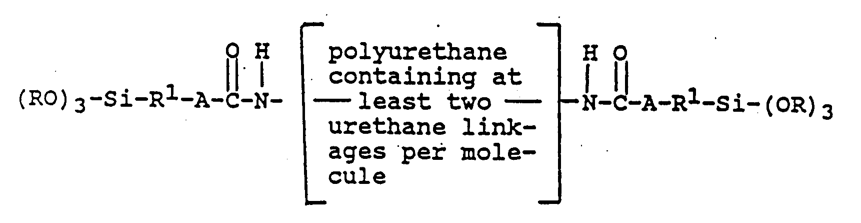 wherein R is lower alkyl of from 1 to 6 carbon atoms;
R¹ is a divalent bridging radical selected from the group consisting of divalent hydrocarbon radicals, divalent hydrocarbon ether radicals, and divalent hydrocarbon amino radicals;
A is selected from -S- and -NR²- where R² is hydrogen or alkyl of from 1 to 6 carbon atoms;
(b) 2.0 to 10.0 parts, based on 100 parts by weight of said polyurethane polymer, of an electrocoat adhesion promoter having the structure, including hydrohalide salts thereof, 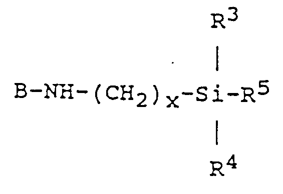 where x is an integer of from 1 to 3;
R³, R⁴ and R⁵ may be the same or different and are selected from alkyl and alkoxyl of from 1 to 4 carbon atoms;
B is 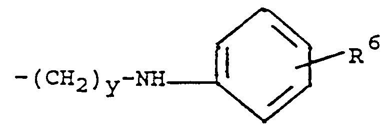 where R⁶ is an alkyl of from 1 to 4 carbon atoms or an alkenyl up to 4 carbon atoms, and
y is an integer of from 1 to 3;
(c) a curing catalyst selected from the group consisting of metallic salts of tin, lead, mercury or Group VIII elements; organo-iron, organo-tin (IV) and organo-lead compounds; aliphatic or aromatic carboxylic acids; toluene-sulfonic acid; salts of organic acids including tin naphthenate, tin octoate, tin butyrate, dibutyl tin diacetate, dibutyl tin dioctoate, dibutyl tin dilaurate, iron stearate, or lead octoate; and organic amines, including trialkylamines, N-substituted piperidines, N,N-substituted piperazines, and pyridine; and
(d) an accelerating agent selected from the group consisting of titanate esters having at least one primary or secondary amine group per molecule.

2. The composition of claim 1, characterized in that the polyurethane polymer is the reaction product of a polyether polyol containing at least two hydroxyl groups per molecule and a number average molecular weight of 1000 to 3000 and an isocyanate having at least two isocyanate groups per molecule.

3. The composition of claim 1 or 2, characterized in that the polyurethane polymer has a number average molecular weight of from 10,000 to 30,000.

4. The composition of any one of the preceding claims, characterized in that the electrocoat adhesion promoter is present in an amount of between 4.0 to 8.0 parts, by weight, based on 100 parts by weight of said polyurethane polymer.

5. The composition of any one of the preceding claims, characterized in that the electrocoat adhesion promoter is N-2-[4-vinyl-(benzeneamino)] ethyl-3-aminopropyltrimethoxy-silane or a hydrohalide salt thereof.

6. The composition of any one of the preceding claims, characterized by including from 1.0 to 10.0 parts, preferably 2.0 to 5.0 parts, by weight of a flexibilizing agent, based on 100 parts by weight of said polyurethane polymer.

7. The composition of claim 6, characterized in that the flexibilizing agent is selected from the group consisting of dioctyl phthalate, dibutyl phthalate, diundecyl phthalate, dioctyl adipate, butyl benzyl phthalate, iso-decyldiphenyl phosphate, di-iso-decyl phthalate, N-butyl-p-toluene-sulfonamide and N-ethyl-p-toluene-sulfonamide and mixtures thereof.

8. The composition of any one of the preceding claims, characterized in that the electrocoat adhesion promoter is N-2-[4-vinyl-(benzeneamino)] ethyl-3-aminopropyltrimethoxy-silane monohydrochloride.

9. A method of bonding fixed-window glass panels to a motor vehicle body characterized by
(a) applying a conventional electrocoat paint coating to the metal body of the motor vehicle;
(b) applying masking means to those portions of the electrocoat painted motor vehicle body set aside to receive a bead of fixed-glass panel sealant;
(c) applying one or more decorative and protective paint coatings to the masked motor vehicle body;
(d) removing the masking means;
(e) applying directly to the previously masked electrocoat painted portions of the motor vehicle body a bead of the polyurethane-based sealant composition according to any one of claims 1 to 8; and
(f) affixing a glass window panel to the sealant bead.

10. A motor vehicle having fixed-window glass panels affixed directly to the electrocoat painted metal body of the motor vehicle by means of a bead of the polyurethane-based sealant composition according to any one of claims 1 to 8.

## Patentansprüche

1. Einkomponentige, grundierungslose, durch Feuchtigkeit härtbare Dichtmasse zum direkten Verkleben von Glas und elektrotauchbeschichteten Metallsubstraten, umfassend ein Gemisch aus
(a) einem Silan-Endgruppen aufweisenden Polyurethanpolymer der Formel 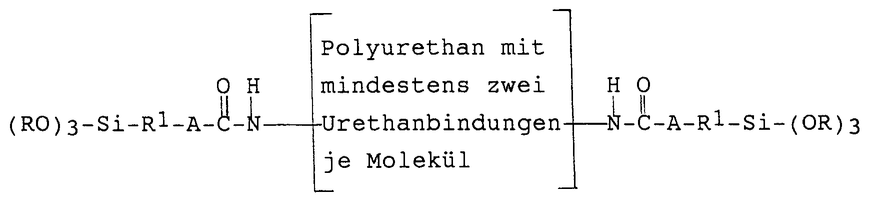 worin R Niedrigalkyl mit 1 bis 6 Kohlenstoffatomen bedeutet;
R¹ ein zweiwertiger Brückenrest ist, der aus der aus zweiwertigen Kohlenwasserstoffresten, zweiwertigen Kohlenwasserstoffetherresten und zweiwertigen Kohlenwasserstoffaminoresten bestehenden Gruppe ausgewählt ist;
A aus -S- und -NR²- ausgewählt ist, wobei R² Wasserstoff oder Alkyl mit 1 bis 6 Kohlenstoffatomen bedeutet;
(b) 2,0 bis 10,0 Teilen, bezogen auf 100 Gewichtsteile des Polyurethanpolymers, eines Haftvermittlers für die Elektrotauchbeschichtung, der die Struktur 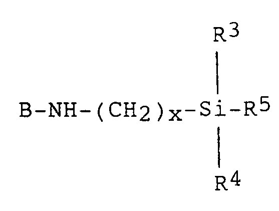 einschließlich der Hydrohalogenidsalze davon, aufweist, worin x eine ganze Zahl von 1 bis 3 ist;
R³, R⁴ und R⁵, die gleich oder verschieden sein können, aus Alkyl und Alkoxyl mit 1 bis 4 Kohlenstoffatomen ausgewählt sind;
B 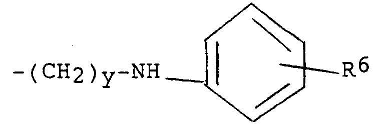 ist, worin R⁶ ein Alkylrest mit 1 bis 4 Kohlenstoffatomen oder ein Alkenylrest mit bis zu 4 Kohlenstoffatomen ist und
y eine ganze Zahl von 1 bis 3 ist;
(c) einem Härtungskatalysator, der ausgewählt ist aus der aus den Metallsalzen von Zinn, Blei, Quecksilber oder den Elementen der Gruppe VIII; Organoeisen-, Organozinn(IV)- und Organoblei-Verbindungen; aliphatischen oder aromatischen Carbonsäuren; Toluolsulfonsäure; Salzen organischer Säuren, einschließlich Zinnaphthenat, Zinnoctoat, Zinnbutyrat, Dibutylzinndiacetat, Dibutylzinndioctoat, Dibutylzinndilaurat, Eisenstearat oder Bleioctoat; sowie organischen Aminen, einschließlich Trialkylaminen, N-substituierten Piperidinen, N,N-substituierten Piperazinen und Pyridin bestehenden Gruppe; und
(d) einem Beschleuniger, der aus der aus den Titanatestern mit mindestens einer primären oder sekundären Aminogruppe je Molekül bestehenden Gruppe ausgewählt ist.

2. Masse nach Anspruch 1, dadurch gekennzeichnet, daß das Polyurethanpolymer das Reaktionsprodukt aus einem Polyetherpolyol, das mindestens zwei Hydroxylgruppen je Molekül enthält und ein mittleres Molekulargewicht von 1000 bis 3000 aufweist, und einem Isocyanat mit mindestens zwei Isocyanatgruppen je Molekül ist.

3. Masse nach Anspruch 1 oder 2, dadurch gekennzeichnet, daß das Polyurethanpolymer ein mittleres Molekulargewicht von 10.000 bis 30.000 besitzt.

4. Mittel nach einem der vorhergehenden Ansprüche, dadurch gekennzeichnet, daß der Haftvermittler für die Elektrotauchbeschichtung in einer Menge von zwischen 4,0 und 8,0 Gewichtsteilen, bezogen auf 100 Gewichtsteile des Polyurethanpolymers, vorliegt.

5. Masse nach einem der vorhergehenden Ansprüche, dadurch gekennzeichnet, daß der Haftvermittler für die Elektrotauchbeschichtung N-2-[4-Vinyl-(benzolamino)]ethyl-3-aminopropyltrimethoxysilan oder ein Hydrohalogenidsalz davon ist.

6. Masse nach einem der vorhergehenden Ansprüche, dadurch gekennzeichnet, daß sie 1,0 bis 10,0, vorzugsweise 2,0 bis 5,0 Gewichtsteile eines Flexibilisierungsmittels enthält, bezogen auf 100 Gewichtsteile des Polyurethanpolymers.

7. Masse nach Anspruch 6, dadurch gekennzeichnet, daß das Flexibilisierungsmittel aus der aus Dioctylphthalat, Dibutylphthalat, Diundecylphthalat, Dioctyladipat, Butylbenzylphthalat, Isodecyldiphenylphosphat, Diisodecylphthalat, N-Butyl-p-toluolsulfonamid und N-Ethyl-p-toluolsulfonamid und deren Gemischen bestehenden Gruppe ausgewählt ist.

8. Masse nach einem der vorhergehenden Ansprüche, dadurch gekennzeichnet, daß der Haftvermittler für die Elektrotauchbeschichtung N-2-[4-Vinyl-(benzolamino)]ethyl-3-aminopropyltrimethoxysilan-Monohydrochlorid ist.

9. Verfahren zum Verkleben von Glasscheiben für feststehende Fenster mit einer Kraftfahrzeugkarosserie, gekennzeichnet durch
(a) Aufbringen einer herkömmlichen Elektrotauchlackierung auf die Metallkarosserie des Kraftfahrzeugs;
(b) Auftragen einer Maske auf diejenigen Bereiche der elektrotauchlackierten Kraftfahrzeugkarosserie, die nicht mit einer Raupe der Dichtmasse für die feststehende Glasscheibe versehen werden sollen;
(c) Auftragen einer oder mehrerer dekorativer und schützender Lackschichten auf die maskierte Kraftfahrzeugkarosserie;
(d) Entfernen der Maske;
(e) Auftragen einer Raupe der Dichtmasse auf Polyurethanbasis gemäß einem der Ansprüche 1 bis 8 direkt auf die zuvor maskierten elektrotauchlackierten Bereiche der Kraftfahrzeugkarosserie und
(f) Ankleben einer Glasfensterscheibe an der Dichtmassenraupe.

10. Kraftfahrzeug mit direkt an die elektrotauchlackierte Metallkarosserie des Kraftfahrzeugs mittels einer Raupe aus der Dichtmasse auf Polyurethanbasis gemäß einem der Ansprüche 1 bis 8 geklebten Glasscheiben für feststehende Fenster.

## Revendications

1. Composition d'étanchéité monocomposant, sans primaire, durcissable à l'humidité, destinée à coller du verre directement sur des substrats métalliques électrolaqués, comprenant un mélange de
(a) un polymère de polyuréthanne terminé par un silane de formule : 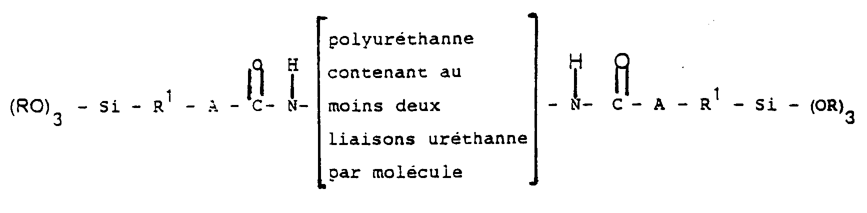 où R est un groupe alcoyle inférieur de 1 à 6 atomes de carbone;
R¹ est un radical de pontage divalent choisi dans Le groupe consistant en radicaux hydrocarbonés divalents, radicaux éthers hydrocarbonés divalents, et radicaux amino hydrocarbonés divalents;
A est choisi parmi -S- et -NR²-, où R² est l'atome d'hydrogène ou un groupe alcoyle de 1 à 6 atomes de carbone;
(b) 2,0 à 10,0 parties, pour 100 parties en poids dudit polymère d'uréthanne, d'un inducteur d'adhésion à l'électrolaquage ayant la structure suivante, y compris les sels de celle-ci : 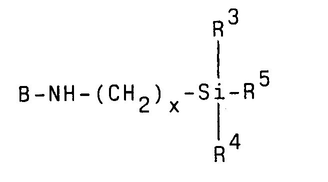 où x est un nombre entier de 1 à 3;
R³, R⁴ et R⁵ peuvent être identiques ou différents et sont choisis parmi les groupes alcoyles ou alkoxyles de 1 à 4 atomes de carbone;
B est 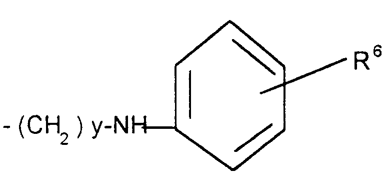 dans laquelle R⁶ est un groupe alcoyle de 1 à 4 atomes de carbone ou un groupe alkényle allant jusqu'à 4 atomes de carbone, et
y est un nombre entier de 1 à 3;
(c) un catalyseur de durcissement choisi dans le groupe consistant en sels métalliques d'étain, de plomb, de mercure ou des éléments du groupe VIII; composés organo-ferreux, organo-stanneux (IV) et organo-plombiques; acides carboxyliques aliphatiques ou aromatiques; acide toluène-sulfonique; sels d'acides organiques comprenant le naphténate d'étain, l'octoate d'étain, le butyrate d'étain, le diacétate d'étain dibutylique, le dioctoate d'étain dibutylique, le dilaurate d'étain dibutylique, le stéarate de fer, ou l'octoate de plomb; et les amines organiques, y compris les trialcoylamines, les pipéridines N-substituées, les pipérazines N,N-substituées, et la pyridine; et
(d) un agent accélérateur choisi dans le groupe consistant en esters de titanate ayant au moins un groupe amine primaire ou secondaire par molécule.

2. Composition selon la revendication 1, caractérisée en ce que le polymère de polyuréthanne est le produit de réaction d'un polyol polyéther contenant au moins deux groupes hydroxyles par molécule et ayant un poids moléculaire moyen molaire de 1000 à 3000 et d'un isocyanate contenant au moins deux groupes isocyanate par molécule.

3. Composition selon la revendication 1 ou 2, caractérisée en ce que le polymère de polyuréthanne a un poids moléculaire moyen molaire de 10.000 à 30.000.

4. Composition selon l'une des revendications précédentes, caractérisée en ce que l'inducteur d'adhésion à l'électrolaquage est présent en une quantité comprise entre 4,0 et 8,0 parties en poids, pour 100 parties en poids dudit polymère de polyuréthanne.

5. Composition selon l'une des revendications précédentes, caractérisée en ce que l'inducteur d'adhésion à l'électrolaquage est le N-2-[4-vinyl-(benzène-amino)] éthyl-3-aminopropyltriméthoxysilane ou un sel halogenhydrate de celui-ci.

6. Composition selon l'une des revendications précédentes, caractérisée en ce qu'elle comprend de 1,0 à 10,0 parties, de préférence de 2,0 à 5,0 parties en poids d'un agent flexibilisant pour 100 parties en poids dudit polymère de polyuréthanne.

7. Composition selon la revendication 6, caractérisée en ce que l'agent flexibilisant est choisi dans le groupe consistant en phtalate dioctylique, phtalate dibutylique, phtalate diundécylique, adipate dioctylique, phtalate butyl benzylique, phosphate d'iso-décyldiphényle, phtalate di-isodécylique, N-butyl-p-toluène-sulfamide et N-éthyl-p-toluène-sulfamide, et les mélanges de ceux-ci.

8. Composition selon l'une des revendications précédentes, caractérisée en ce que l'inducteur d'adhésion à l'électrolaquage est le monochlorhydrate de N-2-[4-vinyl-(benzène-amino)] éthyl-3-aminopropyltriméthoxysilane.

9. Procédé de collage de panneaux de verre pour pare-brises à glace fixe à une carrosserie de véhicule à moteur caractérisé par
(a) l'application d'une couche de peinture classique par électrolaquage sur la carrosserie métallique du véhicule à moteur;
(b) l'application d'un moyen de masquage sur les parties de la carrosserie du véhicule à moteur peintes par électrolaquage destinées à recevoir un ruban de matière d'étanchéité pour panneau de verre à glace fixe;
(c) l'application d'une ou de plusieurs couches de peinture protectrice et décorative sur la carrosserie du véhicule à moteur masquée;
(d) la dépose du moyen de masquage;
(e) l'application directe sur les parties peintes par électrolaquage antérieurement masquées de la carrosserie du véhicule à moteur d'un ruban de la composition d'étanchéité à base de polyuréthanne selon l'une des revendications 1 à 8; et
(f) la fixation d'un panneau de verre à vitre sur le ruban d'étanchéité.

10. Véhicule à moteur ayant des panneaux de verre à glace fixe fixés directement sur la carrosserie métallique peinte par électrolaquage du véhicule à moteur au moyen d'un ruban de la composition d'étanchéité à base de polyuréthanne selon l'une des revendications 1 à 8.
